(19)

Europäisches
Patentamt
European
Patent Office
Office européen
des brevets

(11) **EP 4 006 630 A1**

(12) **EUROPEAN PATENT APPLICATION**
published in accordance with Art. 153(4) EPC

(43) Date of publication:
**01.06.2022 Bulletin 2022/22**

(21) Application number: **20893527.0**

(22) Date of filing: **09.01.2020**

(51) International Patent Classification (IPC):
**G02F 1/03** (2006.01)   **G02F 1/035** (2006.01)

(52) Cooperative Patent Classification (CPC):
**G02F 1/03; G02F 1/035**

(86) International application number:
**PCT/CN2020/071084**

(87) International publication number:
**WO 2021/103294 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2019 CN 201911210442
29.11.2019 CN 201922114656 U**

(71) Applicant: **Suzhou Lycore Technologies Co., Ltd.
Suzhou, Jiangsu 215123 (CN)**

(72) Inventors:
• **LIANG, Hanxiao
Suzhou city, Jiangsu 215123 (CN)**
• **SONG, Yipin
Suzhou city, Jiangsu 215123 (CN)**

(74) Representative: **Dr. Gassner & Partner mbB
Wetterkreuz 3
91058 Erlangen (DE)**

(54) **DISTRIBUTED LIGHT INTENSITY MODULATOR**

(57)    A distributed light intensity modulator, comprising: a substrate (60); a light splitting element (10), an optical waveguide (20) and a light combining element (30) which are sequentially connected and provided on the substrate (60); a driving electrode (40) provided on the substrate (60) and comprising a plurality of sub-driving electrodes (41) arranged at intervals, the optical waveguide (20) sequentially passing through the sub-driving electrodes (41); and at least one voltage bias electrode (50), at least some of which are provided spaced apart from the sub-driving electrodes (41). The length of each sub-driving electrode (41) is far less than the total length of such conventional modulator, and in each sub-driving electrode (41), an optical signal and an electrical signal can be synchronously propagated approximately. The distributed light intensity modulator minimizes the walk-off phenomenon between photoelectric signals. The voltage bias electrodes (50) are provided between the sub-driving electrodes (41) to serve as crosstalk prevention devices for shielding crosstalk between the sub-driving electrodes (41), so that while improving the modulation bandwidth and reducing the driving voltage, the modulator can reduce the bias-drift phenomenon, and prevent the crosstalk between the sub-driving electrodes (41) caused by improving the modulation bandwidth and reducing the driving voltage.

Fig. 1

EP 4 006 630 A1

## Description

## Technical Field

This application relates to the technical field of optical modulation, and specifically, to a distributed optical intensity modulator.

## Background

High-speed electro-optical modulation is wide and important in application, such as optical communication, microwave photoelectrons, laser-beam deflection, and wave front modulation. The electro-optic modulator is a modulator made by an electro-optic effect of some electro-optic crystals, such as a lithium niobate (LiNbO3) crystal, a gallium arsenide (GaAs) crystal and a lithium tantalate (LiTaO3) crystal. The electro-optic effect means that, when a voltage is applied to the electro-optic crystal, the refractive index of the electro-optic crystal will be changed, resulting in a change in the characteristics of the light wave passing through the crystal, so as to realize the modulation of the phase, amplitude, intensity and polarization state of the optical signal.

However, during the modulation of the light, it is hard to realize the modulation of low driving voltage and high modulation bandwidth simultaneously.

## Summary

This application is mainly intended to provide a distributed optical intensity modulator, to realize the modulation of low driving voltage and high modulation bandwidth.

Based on this, embodiments of this application provide a distributed light intensity modulator. The distributed light intensity modulator includes: a substrate; a light splitting element, an optical waveguide and a light combining element that are sequentially connected and disposed on the substrate; a driving electrode, disposed on the substrate and including a plurality of sub-driving electrodes arranged at intervals, the optical waveguide sequentially passing through the sub-driving electrodes; and at least one voltage bias electrode, at least some of which are spaced apart from the sub-driving electrodes.

Optionally, the driving electrode is a coplanar waveguide structure. Optionally, a same electrical signal is applied to the sub-driving electrodes.

Optionally, the electrical signal applied to the adjacent sub-driving electrodes has a time delay. A duration of time delay is a duration required for an optical signal to be transmitted from an initial terminal of the previous sub-driving electrode to an initial terminal of the adjacent next sub-driving electrode.

Optionally, the optical waveguide includes a plurality of modulation portions and a plurality of bending portions connected between the modulation portions. Each of the bending portions is bent toward the previous modulation portion connected to the bending portion.

Optionally, each of the modulation portions includes a first sub-modulation portion and a second sub-modulation portion. Light propagation directions in the first sub-modulation portion and the second sub-modulation portion are opposite.

Optionally, the first sub-modulation portion passes through the sub-driving electrode and/or the voltage bias electrode. The second sub-modulation portion passes through the voltage bias electrode and/or the sub-driving electrode.

Optionally, the first sub-modulation portion is parallel to the second sub-modulation portion. The optical signal propagation directions in the first sub-modulation portion and the second sub-modulation portion are opposite.

Optionally, the voltage bias electrode includes: the voltage signal electrode, to which a bias voltage is applied; and a first grounding electrode and a second grounding electrode, respectively located on two sides of the voltage signal electrode. The driving electrode includes: a driving signal electrode, to which a driving signal is applied; and a third grounding electrode and a fourth grounding electrode, respectively located on two sides of the driving signal electrode.

Optionally, the optical waveguide includes a first modulation arm and a second modulation arm. The first modulation arm penetrates between the voltage bias electrode and the first grounding electrode, and penetrates between the driving signal electrode and the third grounding electrode. The second modulation arm penetrates between the voltage bias electrode and the second grounding electrode, and penetrates between the driving signal electrode and the fourth grounding electrode.

This application has the following beneficial effects.

The driving electrode is designed as a distributed driving electrode. Since the driving electrode is in a distributed type, a length of the driving electrode of each section is far less than a total length of such an equivalent conventional modulator. In addition, a driving signal voltage of each section is also far less than a driving signal voltage of the equivalent conventional modulator. In the driving electrode of each section, the optical signal and the electrical signal can be synchronously propagated approximately, or even synchronously propagated. Therefore, the walk-off phenomenon between photoelectric signals is minimized, and the upper limit of modulation bandwidth is increased. In addition, since the driving electrode is changed to the distributed multi-section driving electrode from a conventional onesection driving electrode, the driving voltage required to be applied to each electrode is greatly reduced. By disposing the voltage bias electrode between the sub-driving electrodes, the electrical signal applied to the voltage bias electrode is different from the electrical signal applied to each sub-driving electrode. Each voltage bias electrode includes a ground wire, so that the voltage bias electrode can be used as a crosstalk prevention device for shielding crosstalk between the sub-driving electrodes. In this way, while synchronously increasing the modulation bandwidth and reducing the driving voltage, the modulator can reduce the bias-drift phenomenon and prevent the crosstalk between the sub-driving electrodes caused by the increasing of the modulation bandwidth and the reducing of the driving voltage. Therefore, the modulation performance of the light modulator is greatly improved.

The electrical signal applied to each sub-driving electrode is the same. Since the same electrical signal is applied to the driving electrode of each section, it is equivalent to that the electrical signal is reset when the electrical signal is propagated along the driving electrode of each section. Therefore, the loss of the electrical signal is greatly reduced, and modulation efficiency is greatly enhanced. Grounding wire sets are respectively disposed between the sub-driving electrodes. The sub-driving electrodes are disposed on parallel portions having a same optical signal propagation direction. By disposing the grounding wire sets on parallel portions of which optical signal propagation directions are opposite to the parallel portions provided with the sub-driving electrodes, the crosstalk between the sub-driving electrodes can be greatly reduced.

**Brief Description of the Drawings**

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:

Fig. 1 is a schematic diagram of a distributed light intensity modulator according to an embodiment of this application.
Fig. 2 is a schematic cross-sectional view of a partial section of a distributed light intensity modulator according to an embodiment of this application.
Fig. 3 is a schematic diagram of another distributed light intensity modulator according to an embodiment of this application.

**Detailed Description of the Embodiments**

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application. In addition, terms "include" and "have" and any variations thereof are intended to cover non-exclusive inclusions.

It is to be noted that the embodiments in this application and the features in the embodiments may be combined with one another without conflict. This application will now be described below in detail with reference to the drawings and the embodiments.

As described in the Background, there is often a trade-off between a driving voltage and a modulation bandwidth. The electro-optic effect is usually weak in an electro-optic medium, so that a low driving voltage requires long enough waveguides to accumulate enough electro-optic effects. However, through research, the inventor has discovered that, there is a group velocity mismatch between the light wave and the driving electrical signal, and long-distance transmission may cause a serious walk-off phenomenon between light wave and driving electrical signal, which severely limits the modulation bandwidth. In addition, long optical waveguides also require long driving electrodes. Due to the resistance loss of an electrode material, a large microwave driving signal propagation loss is caused, resulting in limitation on the possibility of further reducing the driving voltage. Such a serious design trade-off problem exists in almost all electro-optic modulators based on traveling waves, which severely limits the performance of devices.

Under ideal conditions, a lithium niobate modulator shows a maximum output light intensity and a minimum output light intensity without voltage and with voltage, that is, signals 1 and 0. However, due to the material characteristics of a lithium niobate material, two arms of a Mach-Zehnder interferometer (MZI) also have a phase difference even there is no external voltage is applied, causing the output light intensity without voltage and with voltage to be a value between the maximum and the minimum, which is the phenomenon of bias drift. In addition, as the bandwidth increases, the crosstalk between a plurality of signals becomes more and more significant. In the end, the reduction of the driving voltage is hard to continue.

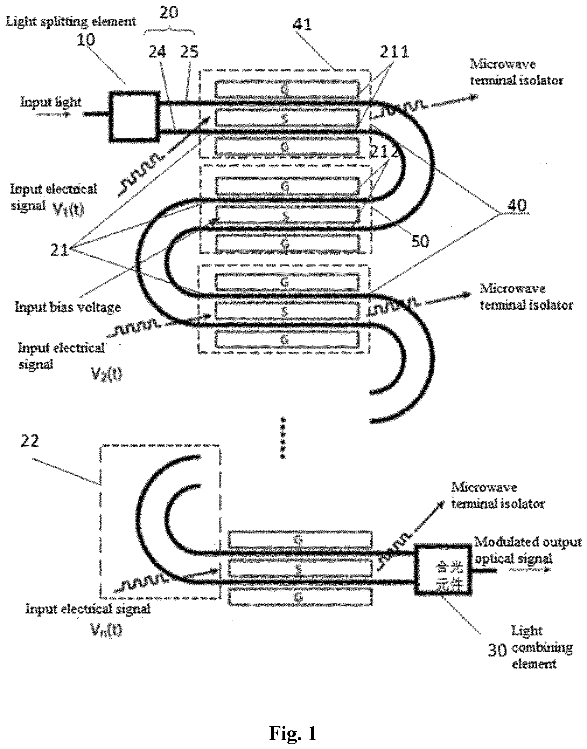

Based on the research discovery of the inventor, embodiments of the disclosure provide a distributed light intensity modulator. As shown in Fig. 1, the distributed light intensity modulator includes: a substrate 60; a light splitting element 10, an optical waveguide 20 and a light combining element 30 that are sequentially connected and disposed on the substrate 60; a driving electrode 40, disposed on the substrate 60 and including a plurality of sub-driving electrodes 41 arranged at intervals, the optical waveguide 20 sequentially passing through the sub-driving electrodes 41; and at least one voltage bias electrode 50, at least some of the voltage bias electrodes 50 are spaced apart from the sub-driving electrodes 41. Specifically, at least one voltage bias electrode 50 may be disposed between the two sub-driving electrodes 41. The voltage bias electrodes 50 and the sub-driving electrodes 41 may be disposed in any sequence.

Due to a group velocity mismatch between the light wave and the driving electrical signal, long-distance transmission may cause a serious light wave-driving electrical signal walk-off phenomenon, which severely limits the driving voltage and bandwidth. Therefore, in this embodiment, the driving electrode 40 is designed as the distributed driving electrode 40. Since the driving electrode 40 is in the distributed type, a length of each sub-driving electrode 41 is far less than a total length of a modulator. In each sub-driving electrode 41, an optical signal and an electrical signal can be synchronously propagated approximately, or even synchronously propagated. In this way, the walk-off phenomenon between light wave and driving electrical signal is minimized, and the upper limit of a high modulation bandwidth is increased. In addition, since the bias-drift phenomenon exists in the lithium niobate modulator, the voltage bias electrode 50 is disposed between the sub-driving electrodes 41, and a bias voltage is applied to the voltage bias electrode 50 to modulate the phase difference on a modulation arm. With the increasing of the modulation bandwidth, the crosstalk between a plurality of signals becomes more and more significant. When the driving electrode 40 includes a plurality of sub-driving electrodes 41 arranged at intervals, the crosstalk not only exists a signal between channels, but also exists in each electrode of each subelectrode. In this embodiment, by disposing the voltage bias electrode 50 between the sub-driving electrodes 41, the electrical signal applied to the voltage bias electrode 50 is different from the electrical signal applied to each sub-driving electrode 41. Each voltage bias electrode 50 includes a ground wire, so that the voltage bias electrode can be used as a crosstalk prevention device for shielding crosstalk between the sub-driving electrodes 41. In this way, while synchronously increasing the modulation bandwidth and reducing the driving voltage, the modulator can reduce the bias-drift phenomenon and prevent the crosstalk between the sub-driving electrodes 41 caused by the increasing of the modulation bandwidth and the reducing of the driving voltage. Therefore, the modulation performance of the light modulator is greatly improved.

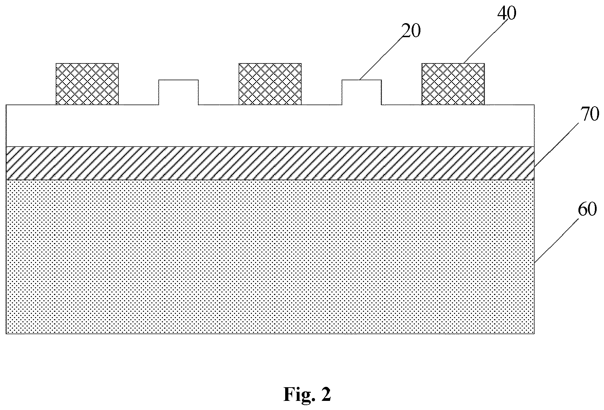

As an exemplary embodiment, a light modulator may be a lithium niobate (LiNbO3) crystal light modulator, a gallium arsenide (GaAs) crystal light modulator a lithium tantalate (LiTaO3) crystal light modulator. In this embodiment, the lithium niobate crystal light modulator is used as an example for description. Fig. 2 is a partial cross-sectional view of the light modulator. The optical waveguide 20 and the driving electrode 40 are located on a surface of the substrate 60. Bonding layers 70 are respectively disposed between the substrate 60 and the optical waveguide 20, and between the substrate and the driving electrode 40.

As an exemplary embodiment, the voltage bias electrode 50 includes: a voltage signal electrode, to which a bias voltage is applied; and a first grounding electrode and a second grounding electrode, respectively located on two sides of the voltage bias electrode. The driving electrode includes: a driving signal electrode, to which a driving signal is applied; and a third grounding electrode and a fourth grounding electrode, respectively located on two sides of the driving signal electrode. The optical waveguide 20 includes a first modulation arm 24 and a second modulation arm 25. The first modulation arm 24 penetrates between the voltage bias electrode and the first grounding electrode, and penetrates between the driving signal electrode and the third grounding electrode. The second modulation arm 25 penetrates between the voltage bias electrode and the second grounding electrode, and penetrates between the driving signal electrode and the fourth grounding electrode.

As an exemplary embodiment, the light splitting element 10 may adopt a Y-branch beam splitting optical waveguide. The light combining element 30 may adopt a Y-branch beam combining optical waveguide. One end of the light splitting element 10 is connected to a single mode fiber and configured to input the optical signal, and Y branches on the other end are respectively connected to the first modulation arm 24 and the second modulation arm 25. Y branches on one end of the light combining element 30 are respectively connected to the first modulation arm 24 and the second modulation arm 25, and the other end is connected the single mode fiber and configured to output the optical signal. Specifically, the input optical signal is divided into two equal or similar beams at the Y branch after passing through a section of the single mode fiber, and the two beams are respectively transmitted by using the first modulation arm 24 and the second modulation arm 25. The first modulation arm 24 and the second modulation arm 25 are made of an electro-optic material, the refractive indexes of the first modulation arm and the second modulation arm vary with the external voltage, so that the two optical signals generate a phase difference when reaching the second Y branch. If an optical path difference between the two optical signals is an integral multiple of a wavelength, a coherence between the two optical signals is enhanced. If the optical path difference between the two optical signals is half of the wavelength, the coherence between the two optical signals is canceled, and the modulator is small in output. Therefore, the optical signal can be modulated by controlling the voltage of the electrical signal on the driving electrode 40.

As an exemplary embodiment, the driving electrode 40 includes N sub-driving electrodes 41 spaced apart from each other along the optical waveguide 20, where $N \geq 2$. As shown in Fig. 1. The driving electrode 40 is divided into N sections, each section merely has a short length L, and a final effective driving length is N * L. In this embodiment, the electrical signal applied to each sub-driving electrode 41 is the same. Since the same electrical signal is applied to the driving electrode 40 of each section, it is equivalent to that the electrical signal is reset when the electrical signal is propagated along the driving electrode 40 of each section. Therefore, the loss of the electrical signal is greatly reduced, and modulation efficiency is greatly enhanced.

In order to better match the electrical signal on each sub-driving electrode 41 to cause the modulation of the optical signal on each sub-driving electrode 41 as the same as possible, in this embodiment, the electrical signal applied to the adjacent sub-driving electrodes 41 has a time delay. A duration of time delay is a duration required for an optical signal to be transmitted from an initial terminal of the previous sub-driving electrode 41 to an initial terminal of the adjacent next sub-driving electrode 41. As an exemplary embodiment, assuming that the electrical signal applied to the first sub-driving electrode 41 is $V_1(t)$, the time of the optical signal to be transmitted from the initial terminal of the nth sub-driving electrode 41 to the initial terminal of the n+1th sub-driving electrode 41 is $T_n$, where n = 1, 2, $\cdots$, N-1 represents which sub-driving electrode 41 it is. An expression of the electrical signal applied to each sub-driving electrode 41 is shown as follows:

$$V_n(t) = V_1(t - \sum_{j=1}^{n-1} T_j)$$

Due to the electrical signal applied on the adjacent sub-driving electrodes 41 and the time delay in propagation of the optical signal before the distributed driving electrode 40, the sub-driving electrode 41 of each section has the same electrical signal. It is equivalent to that the electrical signal is reset when the electrical signal is propagated along the driving electrode 41 of each section. Therefore, the loss of the electrical signal is greatly reduced, and modulation efficiency is greatly enhanced.

In this embodiment, the driving electrode 40 is a coplanar waveguide structure. Exemplarily, the driving electrode may be a GSG coplanar waveguide line, or may be other Radio-Frequency (RF) transmission lines, such as a CPW or CPWG coplanar waveguide line, where G is a grounding electrode, and S is a signal electrode (the coplanar waveguide structure may further use other phase modulation units). An unmodulated constant-bright light source is input from an inlet end, and is divided into two light beams with equal or similar light intensity after passing through the light splitting element 10 to respectively enter the first modulation arm 24 and the second modulation arm 25. The first modulation arm 24 and the second modulation arm 25 simultaneously pass through the driving electrode 40 region of the coplanar waveguide structure. The time of the optical signal passing through the two adjacent sub-driving electrodes 41 in the first modulation arm 24 and the second modulation arm 25 is the same, that is, the two sub-driving electrodes 41 have an equal length. One end of the sub-driving electrode 41 is an input region of the electrical signal, and the other end of the sub-driving electrode is coupled to an external microwave terminal isolator (RF terminator) or a microwave terminal isolating circuit (on-chip circuit). After passing through the plurality of sub-driving electrodes 41, the first modulation arm 24 and the second modulation arm 25 are combined to the same optical waveguide 20 by the light combining element 30 to output. As an exemplary embodiment, the impedance of the sub-driving electrode 41 is the same or similar to the impedance of an electrical signal input terminal, for example, may be 50 Ω. A propagation velocity of the electrical signal in the driving electrode 40 is the same or similar to a velocity of light in the optical waveguide 20. The resistance loss of the electrical signal transmitted in the driving electrode 40 is as low as possible. In this embodiment, the driving electrode 40 may be made of a high-conductivity and lowresistance material, such as gold, silver, copper, aluminum and graphene.

As an exemplary embodiment, the optical waveguide includes a plurality of modulation portions 21 and a plurality of bending portions 22 connected between the modulation portions 21. Each of the bending portions 22 is bent toward the previous modulation portion 21 connected to the bending portion 22. Exemplarily, from the first modulation portion 21 of the optical waveguide, the first bending portion 22 connected to the first modulation portion 21 is bent toward the first modulation portion 21, so that the second modulation portion 21 connected to the first bending portion 22 extends toward the first modulation portion 21. Therefore, after the plurality of modulation portions 21 are connected to the plurality of bending portions 22, a formed shape is roughly an "S" shape or a "snake shape" extending back and forth. As an exemplary embodiment, each of the modulation portions 21 includes a first sub-modulation portion 211 and a second sub-modulation portion 212. A light propagation direction in the first sub-modulation portion 211 differs from a light propagation direction in the second sub-modulation portion 212. Exemplarily, an extending direction of the first sub-modulation portion 211 may be a "forward" direction of the optical waveguide, and an extending direction of the second sub-modulation portion 212 may be a "backward" direction of the optical waveguide.

The first sub-modulation portion 211 passes through the sub-driving electrode 41, and the second sub-modulation portion 212 passes through the voltage bias electrode 50. Those of skill in the art should understand that, the first sub-modulation portion 211 may also pass through the voltage bias electrode 50, and the second sub-modulation portion 212 may also pass through the sub-driving electrode 41. In this embodiment, arrangement positions of the voltage bias electrode 50 and the sub-driving electrode 41 are not limited. Exemplarily, as shown in Fig. 1, in a Y direction of a surface of the substrate, the first sub-modulation portion 211 and the second sub-modulation portion 212 are arranged at intervals, and the sub-driving electrode 41 and the voltage bias electrode 50 are arranged at intervals. Since crosstalk exists between the sub-driving electrodes while synchronously increasing the modulation bandwidth and reducing the driving voltage (adopting the plurality of spaced sub-driving electrodes), the voltage bias electrodes are spaced between the sub-driving electrodes in the Y direction of the surface of the substrate. In this way, while synchronously increasing the modulation bandwidth and reducing the driving voltage, the modulator can reduce the bias-drift phenomenon and prevent the crosstalk between the sub-driving electrodes caused by the increasing of the modulation bandwidth and the reducing of the driving voltage. Therefore, the modulation performance of the light modulator can be greatly improved.

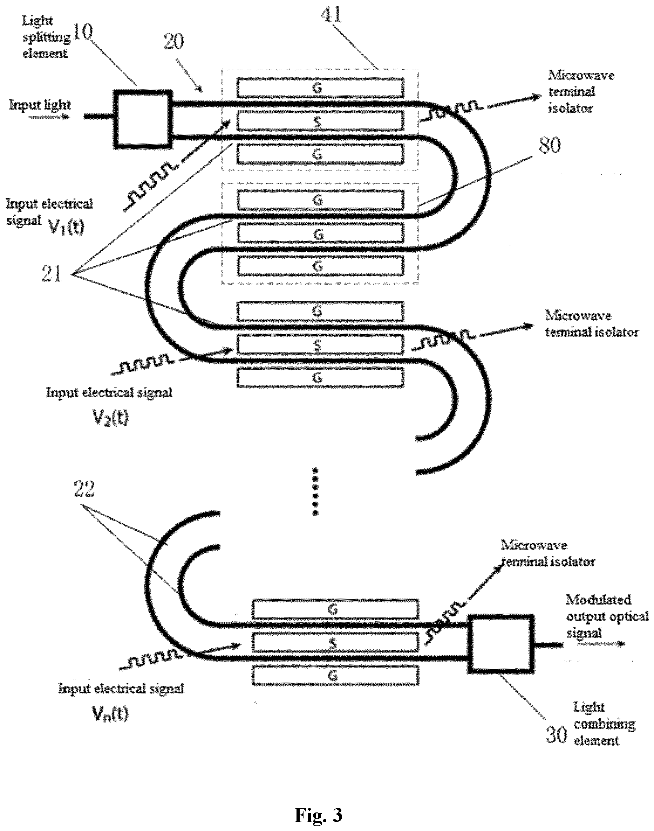

As another exemplary embodiment, in order to prevent the crosstalk between the sub-driving electrodes, as shown in Fig. 3, a grounding wire set 80 may be disposed between the sub-driving electrodes. In this embodiment, the grounding wire set 80 may include a first grounding wire, a second grounding wire and a third grounding wire. The first modulation arm 24 is located between the second grounding wire and the first grounding wire. The second modulation arm 25 is located between the second grounding wire and the third grounding wire. Since the crosstalk may exist between each of the sub-driving electrodes 41, the crosstalk between the sub-driving electrodes 41 can be greatly reduced by adding three grounding wires between two sub-driving electrodes 41.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

## Claims

1. A distributed light intensity modulator, comprising:

   a substrate; a light splitting element, an optical waveguide and a light combining element, sequentially connected and disposed on the substrate;
   a driving electrode, disposed on the substrate and comprising a plurality of sub-driving electrodes arranged at intervals;
   at least one voltage bias electrode, disposed between the sub-driving electrodes, wherein
   at least some of the voltage bias electrodes are spaced apart from the sub-driving electrodes.

2. The distributed light intensity modulator as claimed in claim 1, wherein
   the driving electrode is a coplanar waveguide structure.

3. The distributed light intensity modulator as claimed in claim 1, wherein
   a same electrical signal is applied to the sub-driving electrodes.

4. The distributed light intensity modulator as claimed in claim 3, wherein
   the electrical signal applied to the adjacent sub-driving electrodes has a time delay, wherein a duration of time delay is a duration required for an optical signal to be transmitted from an initial terminal of the previous sub-driving electrode to an initial terminal of the adjacent next sub-driving electrode.

5. The distributed light intensity modulator as claimed in any of claims 1 to 4, wherein the optical waveguide comprises a plurality of modulation portions and a plurality of bending portions connected between the modulation portions, wherein each of the bending portions is bent toward the previous modulation portion connected to the bending portion.

6. The distributed light intensity modulator as claimed in claim 5, wherein
   each of the modulation portions comprises a first sub-modulation portion and a second sub-modulation portion, wherein light propagation directions in the first sub-modulation portion and the second sub-modulation portion are opposite.

7. The distributed light intensity modulator as claimed in claim 6, wherein

   the first sub-modulation portion passes through the sub-driving electrode and/or the voltage bias electrode; and
   the second sub-modulation portion passes through the voltage bias electrode and/or the sub-driving electrode.

8. The distributed light intensity modulator as claimed in claim 6, wherein
   the first sub-modulation portion is parallel to the second sub-modulation portion, and the optical signal propagation directions in the first sub-modulation portion and the second sub-modulation portion are opposite.

9. The distributed light intensity modulator as claimed in claim 1, wherein

   the voltage bias electrode comprises: the voltage signal electrode, to which a bias voltage is applied; and a first grounding electrode and a second grounding electrode, respectively located on two sides of the voltage bias electrode; and
   the driving electrode comprises: a driving signal electrode, to which a driving signal is applied; and a third grounding electrode and a fourth grounding electrode, respectively located on two sides of the driving signal electrode.

10. The distributed light intensity modulator as claimed in claim 9, wherein
the optical waveguide comprises a first modulation arm and a second modulation arm, wherein the first modulation arm penetrates between the voltage bias electrode and the first grounding electrode and penetrates between the driving signal electrode and the third grounding electrode, and the second modulation arm penetrates between the voltage bias electrode and the second grounding electrode and penetrates between the driving signal electrode and the fourth grounding electrode.

**Fig. 1**

**Fig. 2**

Fig. 3

<div align="center">

**INTERNATIONAL SEARCH REPORT**

</div>

| International application No. |
| --- |
| **PCT/CN2020/071084** |

**A.     CLASSIFICATION OF SUBJECT MATTER**

G02F 1/03(2006.01)i;  G02F 1/035(2006.01)i

According to International Patent Classification (IPC) or to both national classification and IPC

**B.     FIELDS SEARCHED**

Minimum documentation searched (classification system followed by classification symbols)

G02F1

Documentation searched other than minimum documentation to the extent that such documents are included in the fields searched

Electronic data base consulted during the international search (name of data base and, where practicable, search terms used)

CNABS, TWABS, CNTXT, TWTXT, VEN, CNKI: 调制, 电极, 多, 段, 分布, 折叠, 屏蔽, 偏置, 偏压, 串扰, modulat+, electrode?, section?, distribut+, fold+, shield+, bias+, cross, talk

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 110441928 A (SOUTH CHINA NORMAL UNIVERSITY) 12 November 2019 (2019-11-12)<br>     description, paragraphs 0042-0047, and figures 3-5 | 1-10 |
| Y | CN 103597386 A (INTEL CORPORATION) 19 February 2014 (2014-02-19)<br>     description, paragraphs 0017-0028, figures 3A, 3B | 1-10 |
| Y | CN 101238405 A (ANRITSU CORP.) 06 August 2008 (2008-08-06)<br>     description, pages 7-9, and figures 1-2 | 1-10 |
| Y | CN 107533248 A (ROCKLEY PHOTONICS LIMITED) 02 January 2018 (2018-01-02)<br>     description, paragraphs 0069, 0100, 0102, figures 3b, 3c, 46, 48 | 1-4, 9, 10 |
| Y | CN 102648434 A (NEC CORPORATION) 22 August 2012 (2012-08-22)<br>     description, paragraphs 0083-0174, and figures 1-8 | 1, 2, 9, 10 |
| Y | US 5157744 A (AT & T BELL LAB) 20 October 1992 (1992-10-20)<br>     description, columns 6-7, figure 3 | 1, 2, 9, 10 |
| A | JP 2016194544 A (SUMITOMO CEMENT CO., LTD.) 17 November 2016 (2016-11-17)<br>     entire document | 1-10 |

☐ Further documents are listed in the continuation of Box C.     ☑ See patent family annex.

| \* | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 August 2020** | **03 September 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 110441928 | A | 12 November 2019 | None | | | |
| CN | 103597386 | A | 19 February 2014 | US | 9036954 | B2 | 19 May 2015 |
| | | | | KR | 101561368 | B1 | 16 October 2015 |
| | | | | WO | 2012135483 | A2 | 04 October 2012 |
| | | | | WO | 2012135483 | A3 | 27 December 2012 |
| | | | | KR | 20130140859 | A | 24 December 2013 |
| | | | | US | 2012251029 | A1 | 04 October 2012 |
| CN | 101238405 | A | 06 August 2008 | WO | 2007007604 | A1 | 18 January 2007 |
| | | | | JP | 2007017683 | A | 25 January 2007 |
| | | | | EP | 1901109 | A1 | 19 March 2008 |
| | | | | JP | 4234117 | B2 | 04 March 2009 |
| | | | | CA | 2614144 | A1 | 18 January 2007 |
| | | | | EP | 1901109 | A4 | 29 July 2009 |
| | | | | US | 7643708 | B2 | 05 January 2010 |
| | | | | US | 2009041403 | A1 | 12 February 2009 |
| | | | | CN | 101238405 | B | 12 January 2011 |
| CN | 107533248 | A | 02 January 2018 | WO | 2016139484 | A1 | 09 September 2016 |
| | | | | GB | 2552618 | A | 31 January 2018 |
| | | | | US | 2018046057 | A1 | 15 February 2018 |
| | | | | GB | 201715242 | D0 | 08 November 2017 |
| | | | | US | 10191350 | B2 | 29 January 2019 |
| CN | 102648434 | A | 22 August 2012 | CN | 102648434 | B | 31 December 2014 |
| | | | | EP | 2487524 | A4 | 09 July 2014 |
| | | | | WO | 2011043079 | A1 | 14 April 2011 |
| | | | | EP | 2487524 | B1 | 31 August 2016 |
| | | | | US | 2012251032 | A1 | 04 October 2012 |
| | | | | US | 8744219 | B2 | 03 June 2014 |
| | | | | JP | 5729303 | B2 | 03 June 2015 |
| | | | | EP | 2487524 | A1 | 15 August 2012 |
| | | | | JPWO | 2011043079 | S | 04 March 2013 |
| US | 5157744 | A | 20 October 1992 | DE | 69218903 | D1 | 15 May 1997 |
| | | | | EP | 0547779 | A3 | 25 August 1993 |
| | | | | EP | 0547779 | A2 | 23 June 1993 |
| | | | | JP | H0682732 | A | 25 March 1994 |
| | | | | JP | 2801488 | B2 | 21 September 1998 |
| | | | | EP | 0547779 | B1 | 09 April 1997 |
| | | | | DE | 69218903 | T2 | 16 October 1997 |
| | | | | CA | 2080932 | A1 | 17 June 1993 |
| | | | | CA | 2080932 | C | 11 November 1997 |
| JP | 2016194544 | A | 17 November 2016 | None | | | |

Form PCT/ISA/210 (patent family annex) (January 2015)